**Europäisches Patentamt**

**European Patent Office**

**Office européen des brevets**

(11) Veröffentlichungsnummer: **0 008 662**
**A1**

(12) # EUROPÄISCHE PATENTANMELDUNG

(21) Anmeldenummer: **79102853.7**

(22) Anmeldetag: **25.07.79**

(51) Int. Cl.³: **B 65 D 83/14**
**F 16 K 35/00**

(30) Priorität: 21.08.78 DE 2836482

(43) Veröffentlichungstag der Anmeldung:
19.03.80 Patentblatt 80/6

(84) Benannte Vertragsstaaten:
AT BE CH FR GB IT LU NL SE

(71) Anmelder: Lachner, Otto
Reinhardsried 69
D-8951 Unterthingau(DE)

(72) Erfinder: Lachner, Otto
Reinhardsried 69
D-8951 Unterthingau(DE)

(74) Vertreter: Tischer, Herbert, Dipl.-Ing. Patentanwälte
Tischer Herbert, Dipl.-Ing. Kern, Wolfgang,
Dipl.-Ing. et al,
Albert-Rosshaupter-Strasse 65
D-8000 München 70(DE)

(54) Vorrichtung zum Füllen und Entleeren von Füllgutbehältern mit gasförmigen und/oder flüssigen Stoffen und Anwendung für eine Pumpe und/oder Dosiereinrichtung.

(57) Die Erfindung betrifft eine Vorrichtung zum Füllen und Entleeren von Füllgutbehältern (6) mit gasförmigen und/oder flüssigen Stoffen, die auch unter Druck stehen können, wobei der zu füllende bzw. zu entleerende Behälter (6) mit einem durch seinen Deckel (9) hindurch axial verschiebbaren Stössel (5) versehen ist, der mit einem Dichtungselement (13) zusammenwirkt, das an der Behälterinnenwand (18) anliegt und den Behälter in zwei Räume unterteilt, von denen der eine einen dem Behälterdeckel (9) abgewandten Raum (11) bildet, der das Füllgut aufnimmt, un der andere einen dem Behälterdeckel zugewandten Raum (19) bildet, der als Transportraum für das Füllgut dient. Das äussere Ende des Stössels ist mit einer Füllarmatur und einer Entleerungsarmatur verbindbar, wobei letztere in bezug auf den Behälterdeckel (9) in der Schliessstellung eine fixe Lage einnimmt, in der der Durchflussweg für das Füllgut gesperrt ist, jedoch zur Entleerung in eine Lage verschiebbar ist, in der der Durchflussweg geöffnet ist und wobei ferner die Füllarmatur durch axiales Verschieben und/oder Verdrehen des Stössels (5) in bezug auf den Behälter (6) einen Füllstellung einnimmt, in der ein Durchflussweg in den Behälterinnenraum (11) geöffnet ist. Das Dichtungselement (13) wirkt dabei im Behälterinnenraum mit einer Dichtungsfläche zusammen, durch die bei einer ein vorgesehenes Mass überschreitenden axialen Verschiebung oder Verdrehung des Stössels (5) die Abdichtung des Behälterrinnenraums zur Durchführung der Befüllung aufhebbar ist.

Eine solche Vorrichtung ermöglicht zwar das Füllen und Entleeren von Füllgutbehältern mit gasförmigen, flüssigen und pastösen Stoffen, bietet aber auch eine Sicherheit gegen unbefugtes teilweises oder vollständiges Wiederauffüllen des Behälters (6). Dabei wird durch spezielle Gestaltung einer Sicherheitseinrichtung und ihre Anwendung gewährleistet, dass sich die zur Füllguteinbringung erforderlichen Massnahmen nicht oder zumindest nicht ohne weiteres aus dem äusseren Aufbau des Behälters oder der Art der Bedienung der Füllgutentnahmeeinrichtung am Behälter erkennen oder ableiten lassen, so dass das Füllen oder Wiederauffüllen solcher Behälter nicht ohne weiteres möglich ist.

EP 0 008 662 A1

./...

Fig.1

PATENTANWÄLTE

# TISCHER & KERN

ALBERT-ROSSHAUPTER-STRASSE 65

D - 8000 MÜNCHEN 70

GERMANY

REPRESENTATIVES
· BEFORE THE
EUROPEAN PATENT OFFICE

0008662

ZUGEL. VERTRETER
BEIM
EUROPÄISCHEN PATENTAMT

TISCHER & KERN · ALBERT-ROSSHAUPTER-STR. 65 · D-8 MÜNCHEN 70

DIPL-ING. HERBERT TISCHER

DIPL-ING. WOLFGANG KERN

TELEFON     (089) 7605520

TELEX       5-212284 pats d

TELEGRAMM/CABLE
            KERNPATENT MUENCHEN

IHR ZEICHEN:
YOUR REF.:

BETREFF:
REF.:

UNSER ZEICHEN,    La-6503/EUR
OUR REF.:         -/lz

DATUM:
DATE:

BEZEICHNUNG GEÄNDERT
siehe Titelseite

## Vorrichtung zum Füllen und Entleeren von Füllgutbehältern mit gasförmigen und/oder flüssigen Stoffen

Die Erfindung betrifft eine Vorrichtung zum Füllen und Entleeren von Füllgutbehältern mit gasförmigen und/oder flüssigen Stoffen, die dabei auch unter Druck stehen können.

An Füllgutbehältern, für die eine solche Vorrichtung gedacht ist, werden gewöhnlich Behälterverschlüsse verwendet, die oftmals so manipuliert werden können, dass sie sich sowohl für die Befüllung als auch die Entleerung dieser Behälter eignen, so beispielsweise Schnellkupplungen zur Herstellung von Schlauchanschlüssen o.dgl.. Derartige Behälterverschlüsse weisen den Nachteil auf, dass infolge ihrer Gestaltung einerseits und/oder der Art ihrer Verbindung mit dem Behälter andererseits der Zugang zu dem im Behälter befindlichen Füllgut auf meist recht einfache Weise möglich ist, so dass beispielsweise Fehlfüllungen möglich sind, die eine unerwünschte

POSTSCHECKKONTO MÜNCHEN NR. 113147-802 (BLZ 700 100 80)

oder unbeabsichtigte Veränderung des. Behälterinhaltes zur Folge haben, oder dass derartige Behälter beispielsweise zu ungeeigneten oder anderen als den eigentlich vorgesehenen Zwecken eingesetzt werden können, wenn sie mit anderen als den ursprünglich vorgesehenen Füllgütern gefüllt werden.

Die Aufgabe der Erfindung besteht deshalb darin, eine Vorrichtung der genannten Art zu schaffen, mit der das Füllen und Entleeren von Füllgutbehältern mit gasförmigen, flüssigen und pastösen Stoffen zwar möglich ist, die jedoch eine Sicherheit gegen unbefugtes teilweises oder vollständiges Wiederauffüllen des Behälters bietet, indem bei der Füllung andersartige und vorzugsweise schwieriger durchzuführende Massnahmen getroffen bzw. dementsprechende Voraussetzungen erfüllt sein müssen, als dies bei der Füllgutentnahme notwendig ist. Dabei soll insbesondere durch die Gestaltung solcher Sicherheitseinrichtungen und durch ihre Anwendung gewährleistet werden, dass sich die zur Füllguteinbringung erforderlichen Massnahmen nicht oder zumindest nicht ohne weiteres aus dem äusseren Aufbau des Behälters oder der Art der Bedienung der Füllgutentnahmeeinrichtung am Behälter erkennen oder ableiten lassen, so dass das Füllen oder Wiederauffüllen solcher Behälter nur in Kenntnis der für diesen Zweck erforderlichen Massnahmen möglich ist.

Diese Aufgabe wird erfindungsgemäss dadurch gelöst, dass der zu füllende bzw. zu entleerende Behälter mit einem durch seinen Deckel hindurch axial verschiebbaren Stössel versehen ist, der auf seinem Umfang ein Dichtungselement aufweist das an der Behälterinnenwand anliegt und den Behälter in zwei Räume unterteilt, von denen dei eine einen dem Behälterdeckel abgewandten Raum oder Innenraum bildet, der das Füllgut aufnimmt und der andere einen dem Behälterdeckel zugewandten oder Zwischenraum bildet, der als Transportraum für das Füllgut dient, dass das äusser Ende des Stössels mit einer Füllarmatur und einer Entleerungsarmatur verbindbar ist, wobei letztere in bezug auf den Behälterdeckel in der Schließstellung eine fixe Lage einnimmt, in der der Durchflussweg für das Füllgut gesperrt ist, jedoch zur Entleerung in eine Lage verschiebbar ist, in der der Durchflussweg geöffnet ist, wobei die Füllarmatur durch axiales Verschieben und/oder Verdrehen des Stössels in bezug auf den Behälter eine Füllstellung einnimmt, in der ein Durchflussweg in den Behälterinnenraum geöffnet ist, und dass das Dichtungselement im Behälterinnenraum mit einer Dichtungsfläche zusammenwirkt, durch die bei einer ein vorgesehen Mass überschreitenden axialen Verschiebung oder Verdrehung des Stössels die Abdichtung des Behälterinnenraums zur Durchführung der Befüllung aufhebbar ist.

Eine weitere Lösungsmöglichkeit ist dadurch gegeben, dass der zu füllende bzw. zu entleerende Behälter mit einem durch seinen Deckel hindurch axial verschiebbaren Stössel versehen ist, der auf seinem Umfang ein Dichtungselement aufweist das an der Behälterinnenwand anliegt und den Behälter in zwei Räume unterteilt, von denen der eine einen dem Behälterdeckel abgewandten Raum oder Innenraum bildet, der das Füllgut aufnimmt, und der andere einen dem Behälterdeckel zugewandten oder Zwischenraum bildet, der als Transportraum für das Füllgut dient, dass das äussere Ende des Stössels mit einer Füllarmatur und einer Entleerungsarmatur verbindbar ist, wobei letztere in bezug auf den Behälterdeckel in der Schließstellung eine fixe Lage einnimmt, in der der Durchflussweg für das Füllgut gesperrt ist, jedoch zur Entleerung in eine Lage verschiebbar ist, in der der Durchflussweg geöffnet ist, und dass das Dichtungselement zum Füllen des Behälters so verformbar ist, dass sich ein Durchflussweg für das Füllgut öffnet, der in der Schließstellung der Entleerungsarmatur geschlossen ist und durch axiales Verschieben des Dichtungselements mit Hilfe des Stössels zur Füllgutentnahme geöffnet wird.

Bei diesen Konstruktionen finden demnach an für die Aufnahme von Füllgütern vorgesehenen Behältern Mittel Anwendung, die mit dem jeweiligen Behälter in einer Verbindung stehen, die entweder nur schwer oder bedingt lösbar ist, oder sogar nur durch ihre Zerstörung oder Zerstörung des Behälters, wobei diese Verbindung vor oder nach der Erstbefüllung des Behälters hergestellt werden kann. Diese fest mit dem Behälter verbundenen Mittel können sowohl zum Verschliessen des Behälters als auch zu seiner Füllung und Entleerung dienen. Ihre Gestaltung ist so geartet, dass zum Zwecke der Behälterentleerung andersartige Handhabungen dieser Mittel erforderlich sind als zur Behälterfüllung, wobei vorzugsweise die zur Behälter-

füllung erforderlichen Massnahmen die Oberwindung einer oder mehrerer Sicherungseinrichtungen notwendig machen, die von den Sicherungseinrichtungen abweichen oder zusätzlich zu ihnen vorgesehen sind, welche der Behälterentleerung zugeordnet sind.

Die erfindungsgemässen Konstruktionen sind darüber hinaus so beschaffen, dass die zur Behälterfüllung und zur Behälterleerung erforderlichen Massnahmen in einer bestimmten Beziehung zueinander stehen, welche nicht ohne weiteres Uneingeweihten erkenntlich ist und sich vor allem nicht aus den für die Behälterleerung erforderlichen Massnahmen ableiten lässt. Dieser sich auf bestimmte Konstruktionsmerkmale der oben genannten Vorrichtung beziehende Zusammenhang ist dadurch gegeben, dass die mit dem Behälter fest verbundenen Mittel so gestaltet sind, dass im Falle eines Füllversuchs ohne genaue Kenntnis des besagten Zusammenhangs der Behälter gebrauchsuntauglich oder zerstört wird und/oder dass das in ihm befindliche Füllgut verloren geht, gemäss einer in den Unteransprüchen gekennzeichneten vorteilhaften Ausführung des Erfindungsvorschlags.

Die erfindungsgemässen Konstruktionen bieten darüber hinaus die Möglichkeit, zur Unterscheidung der zum Zwecke des Füllens und des Leerens vorgesehenen, mit dem Behälter fest verbundenen Mittel ihre Anzahl, Kombination, Lage und Ausbildung sowie Anordnung so zu variieren, dass dadurch für diejenigen, die diese Unterscheidungsmerkmale und ihre gegenseitige Zuordnung nicht kennen,

eine Befüllung oder Wiederauffüllung. des Behälters nicht möglich ist, wodurch eine weitere Sicherheit gegen Missbrauch solcher Behälter bzw. des in ihnen befindlichen Füllgutes geschaffen wird.

Darüber hinaus sind die Füllarmatur und die Entleerungsarmatur, die zeitweise mit dem Behälter verbindbar sind,. erfindungsgemäss so beschaffen, dass mit den zur Entleerung vorgesehenen Mitteln eine Befüllung nicht möglich ist. Ausserdem sind die Armaturen so ausgebildet, dass die fest mit dem Behälter verbundenen Sicherungsmittel jeweils die anfängliche Füllung des Behälters in einer betrieblichen Abfüllstation sowie die jeweilige nachträgliche, unter normalen Umständen folgende Entleerung nicht behindern oder verhindern.

Weitere vorteilhafte Ausgestaltungen des Erfindungsvorschlags sind in den Unteransprüchen gekennzeichnet.

Die Erfindung wird nachfolgend anhand der in der Zeichnung dargestellten Ausführungsbeispiele näher erläutert. In der Zeichnung zeigen:

Fig. 1    eine Längsschnittansicht einer erfindungsgemässen Vorrichtung zum Füllen und Entleeren von Füllgutbehältern,

Fig. 2    eine Querschnittansicht der Linie II-II in Fig.1, wobei die rechte Schnittseite ergänzt ist,

Fig. 3        eine Querschnittansicht längs der
              Linie III-III in Fig. 1,

Fig. 4        eine Längsschnittansicht einer anderen
              Ausführungsform der erfindungsgemässen
              Vorrichtung,

Fig. 5        eine Querschnittansicht längs der
              Linie V-V in Fig. 4, wobei die rechte
              Schnittseite ergänzt ist,

Fig. 6        eine Längsschnittansicht einer weiteren
              anderen Ausführungsform der erfindungsgemässen Vorrichtung,

Fig. 7        eine Längsschnittansicht noch einer
              anderen Ausführungsform der erfindungsgemässen Vorrichtung,

Fig. 8        eine Querschnittansicht längs der
              Linie VIII-VIII in Fig. 7, wobei die
              rechte Schnittseite ergänzt ist,

Fig. 9        eine Längsschnittansicht einer weiteren
              anderen Ausführungsform der erfindungsgemässen Vorrichtung,

Fig. 10       eine Längsschnittansicht noch einer
              anderen Ausführungsform der erfindungsgemässen Vorrichtung,

Fig. 11       eine Querschnittansicht längs der
              Linie XI-XI in Fig. 10, und

Fig. 12       eine Querschnittansicht längs der
              Linie XII-XII in Fig. 10.


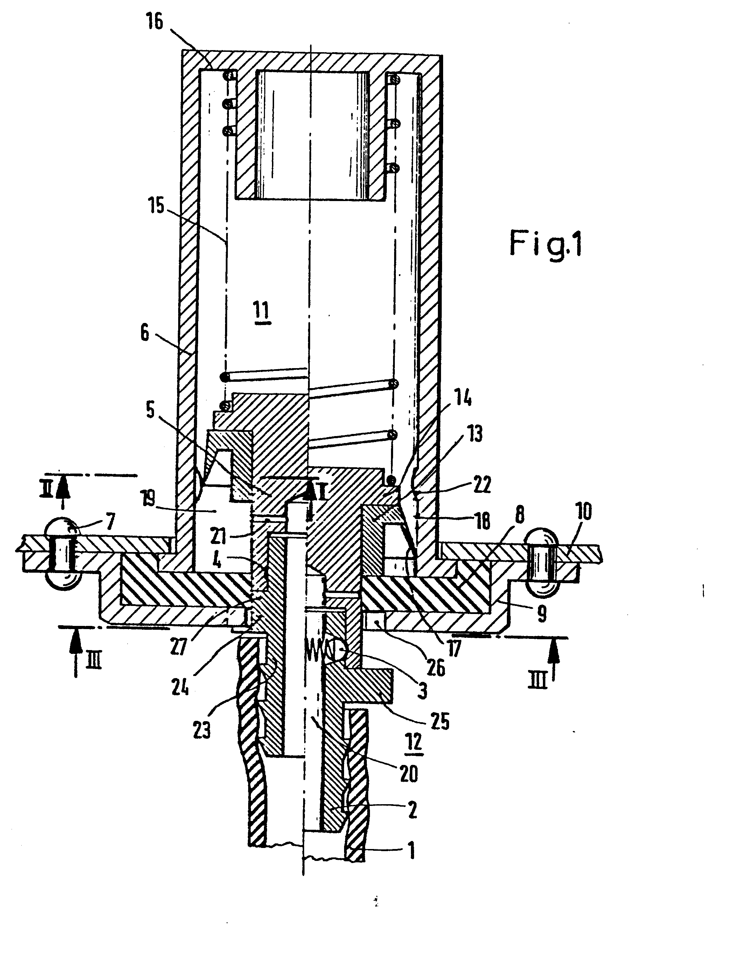

Die Fig.1, 4, 6, 7, 9 und 10 zeigen linksseitig
die jeweilige Vorrichtung in Füllstellung in Verbindung mit einer Füllarmatur und rechtsseitig
in Schließstellung in Verbindung mit einer Entnahmearmatur.

Fig. 1 bis 3 zeigen eine Vorrichtung, die dazu dient, gasförmige, flüssige oder dünnflüssige Stoffe in einem drucklosen oder unter Druck stehenden Behälter zu speichern und hieraus wieder zu entnehmen, wobei sowohl zum Zwecke der Füllung als auch der Entleerung des Behälters 6 ein und derselbe Schlauch 1 Verwendung finden kann. Zum Zwecke der Füllgutentnahme wird dieser mit dem Kupplungsstecker 2 verbunden, welcher seinerseits durch eine oder mehrere Kugeln 3 oder mit Hilfe eines nicht dargestellten O-ring-förmigen nachgiebigen Elementes, das in eine Ringnut 4 des Stössels eingreift, in letzterer festgehalten ist. Der zu entnehmende gasförmige oder flüssige Stoff befindet sich dabei im Innenraum 11 des Behälters 6 unter einem gewissen Überdruck gegenüber der äusseren Umgebung 12, der beispielsweise durch Kompression des vor der Befüllung des Behälters in dessen Innenraum 11 vorhandenen Luftvolumens beim Befüllen entstanden ist und der gross genug ist, um die Dichtlippe 17 des in Form einer Manschette 13 ausgebildeten Dichtungselements von der Behälterinnenwand 18 abzuheben und somit den Zwischenraum 19 demselben Drucke auszusetzen. Wird demzufolge der Stössel 5 gegen die Kraft einer Druckfeder 15 in Axialrichtung gegen den Behälter 6 verschoben, so dass die in dem Stössel 5 befindliche Radialbohrung 21 den Bereich der Behälterdeckeldichtung 8 in Axialrichtung verlässt, so kann das Füllgut aus dem Innenraum 11 über den Zwischenraum 19, die Radialbohrung 21 und die Bohrung 20 innerhalb des Stössels 5 und des Kupplungssteckers 2 in den Schlauch 1 und von dort zu seiner vorgesehenen Weiterverwendung gelangen.

Dabei ist der Behälter 6 zusammen mit der Druck-. feder 15, dem Stössel 5, der Manschette 13, der Deckeldichtung 8 und dem Deckel 9 durch eine nur durch Zerstörung lösbare Nietverbindung 7 an einer als Träger dienenden Platte 10 befestigt.

Würde nun mit Hilfe des Kupplungssteckers 2 versucht, den Behälter zu befüllen, so wäre dies aus mehreren Gründen nicht möglich, da zum einen infolge der nur durch Zerstörung lösbaren Verbindung ein direkter Zugang zum Behälterinnenraum 11 nicht möglich ist, und nach erfolgter Zerstörung die Vorrichtung ohne die schwierig durchzuführende Wiederherstellung dieser Verbindung ihre Gebrauchstauglichkeit verliert. Zum anderen ist sowohl in der Verschlußstellung aufgrund einer dreifachen Absicherung des Zugangs zum Innenraum 11, als auch in den durch den Kupplungsstecker 2 durch dessen Bund 25 bis zum Anschlag an den Deckel 9 möglichen Zwischen- und Entnahmestellungen durch die mindestens einfache Absicherung des Zugangs zum Behälterinnenraum 11 infolge der durch das Anpressen der Dichtlippe 17 gegen die Behälterinnenwand 18 erzeugten Abdichtung auf dem Entnahmeweg kein Zustrom zum Behälterinnenraum möglich. Allenfalls würde das in den Zwischenraum gelangte Füllgut unter der Kraft der Druckfeder 15 auf dem Entnahmeweg wieder aus diesem verdrängt. Die dreifache Absicherung des Zugangs zu dem Innenraum 11 besteht darin, dass die Deckeldichtung 8 die Radialbohrung 21 abdichtet, ferner eine weitere Abdichtung dadurch gegeben ist, dass die Druckfeder 15 die reibschlüssig und dichtend auf dem Stössel 5 befestigte Manschette 13 gegen die Deckeldichtung 8 presst, und darüber hinaus eine weitere Abdichtung zwischen der Dichtlippe 17 der Manschette 13, und der Behälterinnenwand 18 erfolgt, wenn der Zwischenraum 19 einem höheren Druck ausgesetzt ist als der Behälterinnenraum.

Die Behälterinnenwand 18 ist mit Unebenheiten 22 ausgestattet, die die Dichtwirkung der Dichtlippe 17 gegen die Behälterinnenwand 18 ausser Funktion setzen, wenn sich die Dichtlippe 17 in gleicher Höhe mit diesen Unebenheiten 22 befindet. Dabei ist vorausgesetzt, dass die Unebenheiten so gestaltet sind, dass sich zwischen der Dichtlippe 17 und der Behälterinnenwand 18 Spalte ergeben, die die Dichtlippe 17 trotz ihrer Duktilität nicht abzudichten vermag und somit eine Verbindung zwischen dem Innenraum 11 und dem Zwischenraum 19 selbst dann zustandekommt, wenn ein Druckgefälle vom Zwischenraum 19 zum Innenraum 11 vorhanden ist. Dabei ist es unerheblich, ob, wie in Fig. 1 dargestellt, die Unebenheiten 22 in Form von Erhöhungen auf oder in nicht dargestellter Weise in Form von Vertiefungen in der Behälterinnenwand 18 oder als Kombination derartiger Erhöhungen und Vertiefungen ausgebildet werden, solange bei gleicher Höhenlage der Unebenheiten 22 mit der Dichtlippe 17 die Voraussetzung zu einer Befüllung des Behälterinnenraums 11 infolge der erwähnten Spaltbildung geschaffen ist. Demzufolge stellt die Einstellung der Dichtlippe 17 mit Hilfe des Stössels 5 auf die Höhe der Unebenheiten 22 eine Sicherung dar, deren Überwindung anderweitige Massnahmen erforderlich macht als solche zum Zwecke der Füllgutentnahme bzw. der Behälterentleerung. Dabei reicht insbesondere das durch den Bund 25 des Kupplungssteckers 2 bis zu einem Anschlag an den Deckel 9 vorgegebene Axialspiel der Kupplung nicht aus, um die Dichtlippe 17 in die für eine Behälterbefüllung erforderliche Höhenlage der Unebenheiten 22 zu bringen. Dies kann vielmehr nur mit Hilfe anderer und zeitweilig insbesondere zum Zweck der Behälterbefüllung mit dem Behälter verbundener Mittel geschehen, wobei die Gestalt dieser Mittel in Abhängigkeit von den an dem Stössel 5 bzw. der Manschette 13 angreifenden Kräften unterschiedlich und wählbar ist, und sich in Abhängigkeit hiervon das Kraftegleichgewicht selbsttätig bei unterschiedlichen Höhenlagen der Dichtlippe 17 einstellt.

Dabei sind grundsätzlich folgende Fälle zu unterscheiden, wobei vorausgesetzt ist, dass durch eine geringe Axialverschiebung der Kupplung 5 aus ihrer Endlage bzw. Schließstellung der Zugang zum Zwischenraum 19 über die Bohrungen 20 und 21 frei wird und sich die Höhenlage der Dichtlippe 17 als Gleichgewichtslage der an den Stössel 5 angreifenden Kräfte ergibt. Diese Kräfte bestehen aus der durch den Fülldruck vor allem im Zwischenraum 19 entwickelten Schubkraft sowie den auf den Stössel 5 von aussen aufgebrachten Kräften einerseits und den dagegenwirkenden Kräften, nämlich dem Behälterinnendruck, der Federvorspannkraft, der vom Verformungsweg abhängigen Rückstellkräfte, andererseits, wobei letztere sich insbesondere während des Füllvorgangs ändern können.

Ist infolge eines geringen Fülldurckes die aus ihm resultierende Schubkraft im Vergleich zu den entgegenwirkenden Kräften gering, so wird die Gleichgewichtslage des Stössels 5 bereits in ihrer Endlage odernach sehr geringem Axialhub des Stössels 5 erreicht. Demzufolge kann sich unter der Wirkung des Fülldruckes die Dichtlippe 17 nicht selbsttätig auf die zur Befüllung des Behälterinnenraums 11 erforderliche Höhenlage einstellen, só dass unter dem Einfluss der entgegenwirkenden Kräfte in den Zwischenraum 19 eingedrungenes Füllgut auf dem Entnahmeweg wieder aus diesem verdrängt wird.

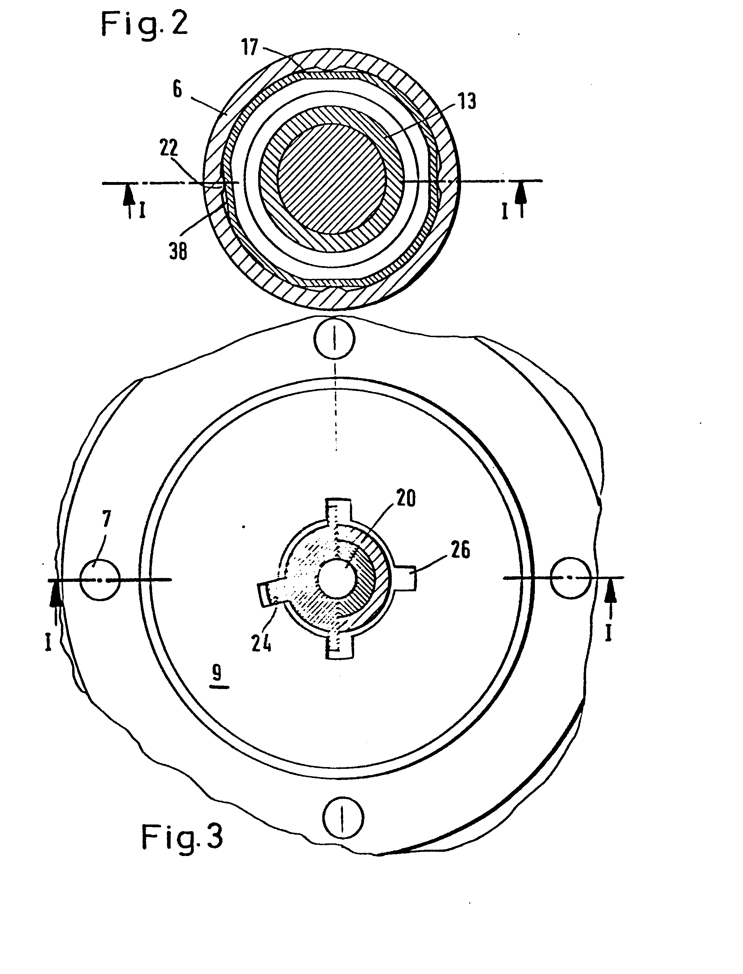

Kommt in Umkehrung der vorgenannten Bedingungen jedoch ein hoher Fülldruck zur Anwendung, so dass die aus ihm resultierende Schubkraft zumindest zu Beginn des Beschleunigens des Stössels 5 samt Manschetten 13 wesentlich grösser ist als die entgegenwirkenden Kräfte, so werden unter der Voraussetzung, dass die Unebenheiten 22 keinen wesentlichen zusätzlichen Widerstand erzeugen, diese rasch überfahren, wie in den Fig. 1 und 2 gezeigt, indem die Dichtlippe über sie hinweggeleitet und die Gleichgewichtslage in einer Höhe des Behälters erreicht, in welcher die Behälterinnenwand eine wiederum glatte Oberfläche aufweist. Demzufolge wird auch in diesem Fall eine Behälterfüllung aufgrund einer fülldruckabhängigen, selbsttätig sich einstellenden Höhenlage der Dichtlippe 17 vereitelt und nach Aufheben des Fülldruckes und unter dem Einfluss der entgegengesetzt wirkenden Kräfte im Zwischenraum 19 befindliches Füllgut wieder aus diesem verdrängt.

Wenn durch die Formgebung der Unebenheiten 22, die beispielsweise, wie gezeigt, als um den Wandumfang verteilte Höcker ausgebildet sind, jedoch auch Vertiefungen sein können, ein geringerer Toleranzbereich für die zur Behälterbefüllung erforderliche Höhenlage der Dichtlippe 17 vorgegeben ist, kann demzufolge der Füllvorgang nur schwer durchführbar sine, es sei denn, dass in Form weiterer Hilfsmittel, die mit dem Behälter 6 nur zeitweilig zu Füllzwecken verbunden werden, zusätzliche Möglichkeiten zur für diesen Zweck erforderlichen richtigen Einstellung der Höhenlage der Dichtlippe 17 geschaffen werden.

Eine solche Möglichkeit besteht gemäss der Ausführungsform nach den Fig.1 bis 3 darin, zur Befüllung des Behälters einen speziell und abweichend von dem zur Behälterentleerung vorgesehenen Kupplungsstecker 2 gestalteten anderen Kupplungsstecker 23 zu verwenden, welcher einen Bund 24 aufweist und einen weiteren Bund 27 besitzt, wobei letzterer mit dem Stössel 5, zum Anschlag gebracht, die korrekte Höhenlage der Dichtlippe 17 dann herstellt, wenn der erste Bund 24 auf dem Behälter 6 oder einem mit diesem fest verbundenen Teil ebenfalls zum Anschlag gebracht wird. Dabei ist jedoch füllabhängig mit zwei unterschiedlichen Ausbildungen und Verfahrensweisen des Kupplungssteckers 23 zu arbeiten.

Im Falle der in Fig. 1 gezeigten Ausbildung muss der Behälter bei unterkritischen Fülldrücken gefüllt werden und es müssen gleichzeitig zusätzliche äussere Kräfte am Kupplungsstecker 23 angreifen, um diesen auf dem Behälter 6 zum Anschlag zu bringen. Mit "unterkritischer Fülldruck" wird hier derjenige Druck im Behälter bezeichnet, der die selbsttätige Einnahme der zum Füllen notwendigen Höhenlage der Dichtlippe 17 bewirkt. Muss jedoch füllgutbedingt mit überkritischen Drücken gearbeitet werden, so muss durch geeignete Massnahmen, beispielsweise durch eine gefederte Kugel 3 im Eingriff mit der Ringnut 4 des Kupplungssteckers 23, für eine axiale Verriegelung zwischen dem Kupplungsstecker 23 und dem Stössel 5 und/oder notfalls durch den Angriff einer äusseren Zugkraft am Kupplungsstecker 23 für eine Entlastung des Anschlags am Behälter bzw. an dem mit diesem fest verbundenen Teil gesorgt werden.

Eine andere Möglichkeit zur Einstellung der richtigen Höhenlage der Dichtlippe 17 bietet die Verwendung eines Fülldruckreglers, wobei die Regelung aufgrund einer in der Fülleitung erfolgenden Druckmessung vorgenommen werden kann, die sich vorzugsweise der beim Oberfahren der Unebenheiten 22 erfolgenden Druckänderung aufgrund des hierbei zwischen dem Zwischenraum 19 und dem Innenraum 11 durch die Spalten 38 (Fig.2) hindurch stattfindenden Strömungsvorgangs bedient, ohne dass dabei ein mit einem Anschlag versehenes Verbindungsteil benutzt wird. In Abwandlung dieser Verfahrensweise lässt sich auch durch von aussen an dem Stössel 5 angreifende, fülldruckabhängige Kräfte jedoch ohne Regelung des Fülldrucks die genaue Höhenlage der Dichtlippe 17 einstellen.

Bei Verwendung von Behältern, beispielsweise Spraydosen, für besondere Füllgüter kann ein Interesse daran bestehen, im Falle von unsachgemässen oder unzulässigen Befüllungsversuchen, die ohne Kenntnis

der Funktionsweise der zeitweilige mit dem Behälter zu Füllzwecken zu verbindenen Mittel durchgeführt werden, die Funktionsfähigkeit eines so behandelten Behälters zu zerstören, und zwar unter gleichzeitiger Bewahrung oder auch unter Aufgabe, also Verlust des Behälterinhalts.

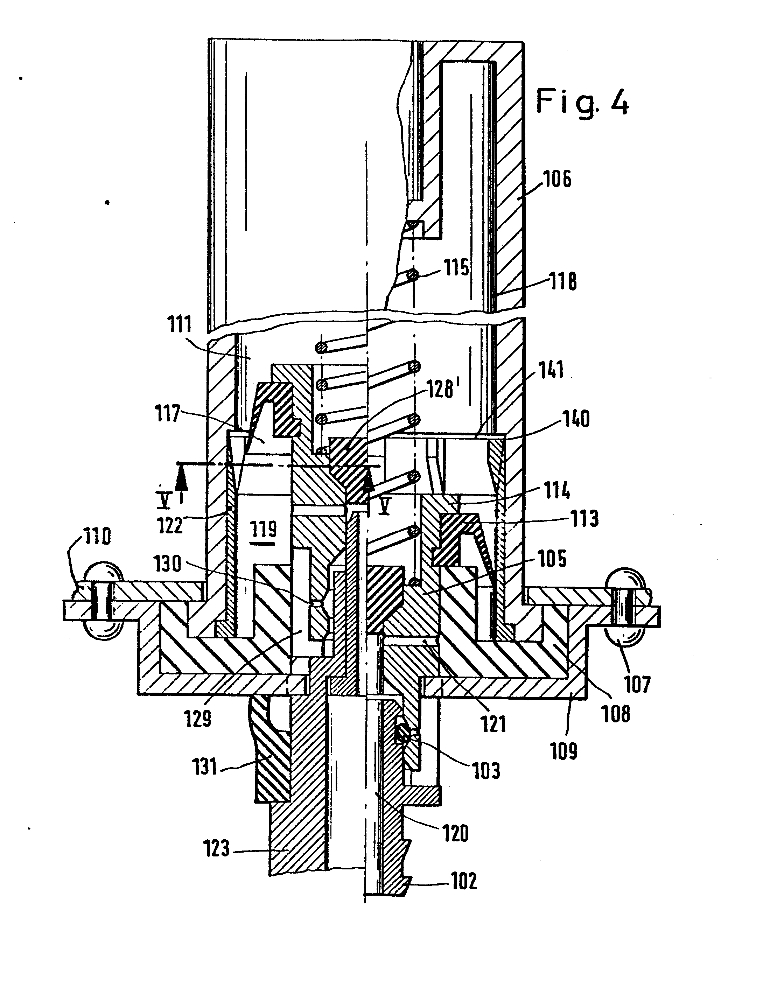

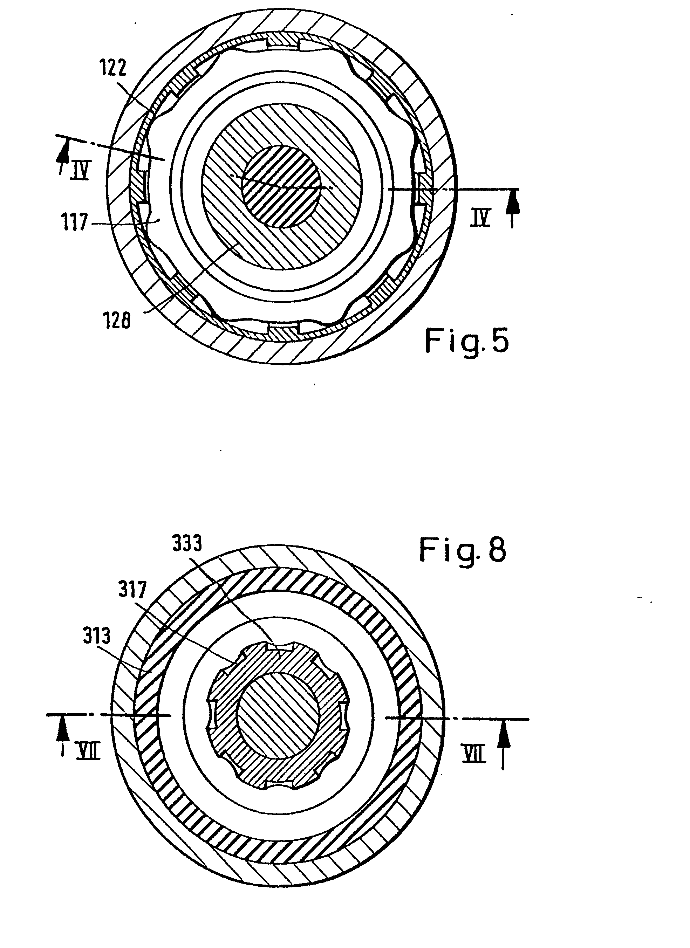

Erfindungsgemäss sind derartige Mittel bzw. solche Sicherungsmöglichkeiten vorgesehen, und zwar sowohl in Verbindung mit der Gestaltung ohnehin vorhandener Füllelemente als auch durch gesonderte Vorkehrungen einerseits und mit Hilfe sowohl der fest als auch der nur zeitweilig mit dem Behälter verbundenen Armaturen andererseits. Die Ausführungsform nach den Fig. 4 und 5 zeigt einige solcher Möglichkeiten.

So ist bei dieser Ausführungsform durch die besondere Gestaltung der Unebenheiten 122 in Form von Rippen dafür gesorgt, dass im Falle eines Oberfahrens dieser Unebenheiten 122 durch die Dichtlippe 117 der Stössel 105 auch unter dem Einfluss der wirkenden Rückstellkräfte nicht mehr in seine Endlage bzw. Schließstellung zurückkehren kann, da sich die Dichtlippe hinter den von den Unebenheiten 122 gebildeten Anschlagflächen 140 verhakt und somit auch nicht mehr in Füllstellung gebracht werden kann. Infolge des im Behälterinnenraum 111 herrschenden Oberdruckes wird nach Abschaltung eines allenfalls im Zwischenraum 119 wirkenden Fülldruckes der Behälterinhalt nahezu vollständig auf dem Entleerungsweg abströmen und verlorengehen.

Eine derartige Verhakung der Dichtlippe 117 kann aber auch anweichend von der Darstellung in Fig.4 erfolgen, wenn anstelle der hier als Erhöhung verwendeten Unebenheiten Vertiefungen in der Behälterinnenwand vorgesehen werden, indem beispielsweise
den in Längsrichtung verlaufenden Vertiefungen
eine vollständige rundumlaufende Vertiefung überlagert wird, wie sie beispielsweise in Fig. 4 bei
141 im Zusammenhang mit den Anschlagflächen 140
dargestellt ist. Ein besonderer Vorteil einer derartigen Verhakung der Dichtlippe im Behälter unter
gleichzeitiger Anwendung der in Fig.4 gewählten
Längenabmessungen besteht darin, dass in diesem
Falle der Stössel 105 in den Behälter eintaucht
und somit keine Angriffsmöglichkeit für ein gewaltsames Herausholen unter Beschädigung der Dich -
tung 117 bietet, wodurch die Füllsicherung unwirksam würde.

In Fig, 4 ist noch eine weitere Möglichkeit der
Ausserfunktionssetzung des Behälters bei unsachgemässen Manipulationen zur Behälterbefüllung dargestellt. Hierbei ist ein Stöpsel 128 aus elastischem Material vorgesehen, der unter dem Einfluss des im Behälterinnenraums 111 herrschenden
Oberdrucks eine dichtende Verbindung mit dem
Stössel 105 bildet. Auf diesem Wege kann also
das Füllgut nicht aus dem Behälterinnenraum entweichen. Der Stöpsel 128 vermag aber ohne die
auf ihn aus dem Behälterinnenraum 111 wirkende
Druckbelastung in umgekehrter Richtung nur geringe
Kräfte aufzunehmen, bei deren Oberschreitung sich
seine im wesentlichen kraftschlüssige oder auch
teilweise formschlüssige Verbindung zum Stössel
105 lösen und er selbst in den Behälterinnenraum
111 geschoben würde.Dabei spielt es keine Rolle,
ob dieser Zustand seine Ursache in einer unsachgemässen Fülldruckbelastung oder mechanisch von aussen einwirkenden Mitteln hat, da jedenfalls ein zumindest weitgehender Verlust des im Behälter befindlichen Füllgutes die Folge ist, das dabei wenigstens teilweise nicht auf dem normalen Entleerungsweg ausströmt.

Der Stöpsel 128 selbst könnte aber auch so beschaffen sein, dass er sich dann, wenn sein hinteres Ende bei unsachgemässer Befüllung aus dem Bereich der Deckeldichtung 108 gerät, aufgrund einer radialen Vorspannung in bezug auf die Deckeldichtung seitlich verschiebt, so dass er nicht mehr in seine Ausgangslage zurückbringbar ist.

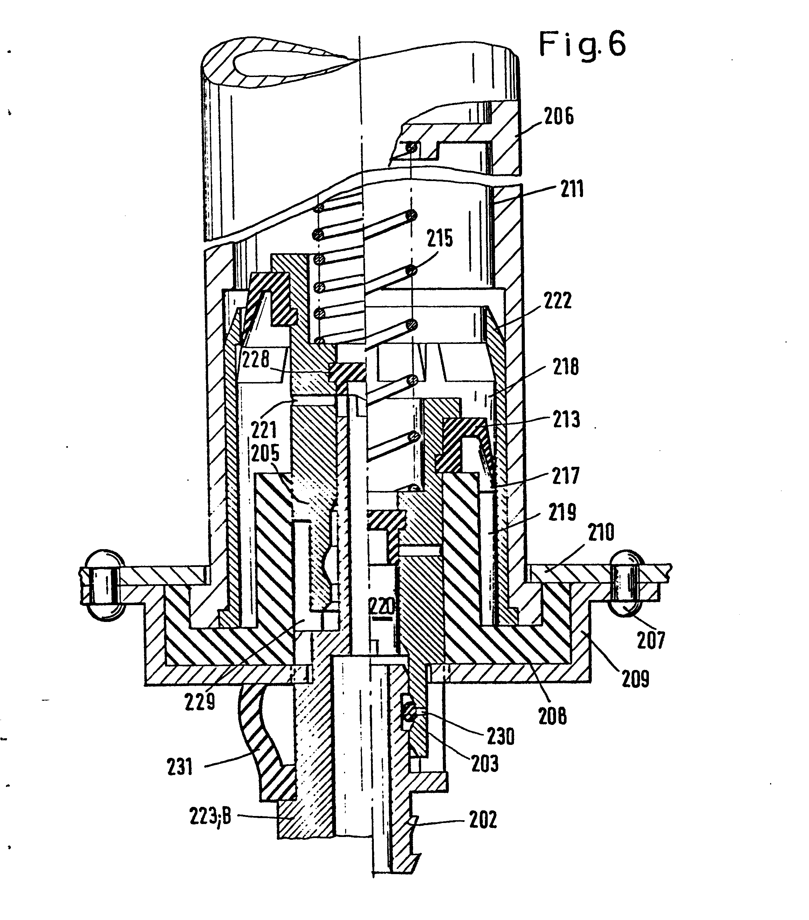

In anderen Fällen kann es wiederum von Interesse sein, dass bei unsachgemäss durchgeführten Füllversuchen der Behälter ausser Funktion gesetzt wird, ohne dass dabei Füllgut aus dem Behälter ausströmt. Eine Anordnung, die diese Aufgabe erfüllt, ist in Fig. 6 dargestellt. Werden hier infolge unsachgemässer Manipulationen die Unebenheiten 222 durch die Manschette 213 überfahren, so verhakt sich ebenfalls die Dichtlippe 217 hinter den Unebenheiten. Im Gegensatz zu den vorgenannten Beispielen wird hier jedoch, bedingt durch die Formgebung der Unebenheiten 222, unter dem Einfluss der Rückstellkräfte der Druckfeder 215 und des im Behälterinnenraums 211 herrschenden Druckes erneut eine dichtende Verbindung zwischen der Dichtlippe 217 und der Behälterinnenwand 218 bzw. dem die Unebenheiten 222 tragenden Teil hergestellt, ohne dass dabei das Füllgut aus dem Behälterinnenraum 211 in den Zwischenraum 219 gelangen kann. Der Stössel 205 verbleibt hier ebenfalls infolge der Verhakung der Dichtlippe 217

0008662

- 18 -

in einem in den Behälter eingetauchten Zustand.
Die eigentliche Funktion der rippenförmigen Unebenheiten 222 ebenso wie derjenigen 122 bei der
Ausführungsform nach Fig. 4 wird im folgenden
noch beschrieben.

Im Falle der in Fig. 6 gezeigten Ausführungsform
ist die Längenabmessung der rippenförmigen Unebenheiten 222 zusammen mit derjenigen der Deckeldichtung 208 so gewählt, dass im Falle der Verhakung
der Dichtlippe 217 kein im Zwischenraum 219 befindliches Füllgut aus dem Behälter gelangen kann,
weil in diesem Fall, wie aus Fig.6 ersichtlich,
zwischen der Deckeldichtung 208 und dem Stössel
205 eine Oberdeckung stattfindet, die ein Entweichen verhindert. Des weiteren ist in Fig. 6
die Verwendung eines Stöpsels 228 dargestellt,
der sich in formschlüssiger Verbindung mit dem
Stössel 205 befindet und gleichzeitig die Radialbohrung 221 überdeckt. Im Entleerungsfalle wird
der aus elastischem Material bestehende Stöpsel
228 durch den in der Radialborhung 221 herrschenden Druck so stark verformt, dass das Füllgut an
ihm vorbeiströmen kann. Im Befüllungsfalle wirkt
dieser Stöpsel als Rückschlagventil in bezug auf
die Bohrung 221, so dass er zum Zwecke der Füllung
des Behälters und bedingt durch die Ausbildung
der Füllarmatur B, 223 verformt werden muss, damit die Radialbohrung 221 freigelegt wird.

Bei den in den Fig.1 bis 6 dargestellten Ausführungsformen besteht demzufolge eine Füllsicherung
für den Behälter in der Verwendung von Unebenheiten 22,122 bzw. 222 in Verbindung mit der jeweiligen Behälterinnenwand 18,118 bzw. 218. Es können jedoch sowohl unabhängig hiervon als auch in Verbindung hiermit weitere Füllsicherungen vorgesehen werden. Eine derartige andere Füllsicherung ist beispielsweise dadurch gegeben, dass der jeweilige Behälterdeckel 9,109,209 bzw. 309 eine Öffnung 26,126,226 bzw. 326 zur Durchführung des jeweiligen Stössels 5,105,205 bzw. 305 und/oder des zu Füllzwecken vorgesehenen Kupplungssteckers 23,123,223 bzw. 323 aufweist, deren Querschnitt nicht rotationssymmetrisch ist und vorzugsweise eine vieleckige, sternförmige oder eine sonstige Art der von der rotationssymmetrischen Form abweichenden Ausbildung aufweist, so dass die zum Füllen des Behälters erforderliche Höheneinstellung der jeweiligen Dichtlippe nur mit Hilfe eines im Querschnitt dieser Öffnung angepassten Kupplungssteckers erfolgen kann, wie dies beispielsweise aus Fig.3 entnommen werden kann. Dabei können die jeweils fest mit dem Behälter verbundenen Mittel zu jeweils unterschiedlichen Zwecken und/oder zum Zwecke der Schaffung weiterer zusätzlicher Füllsicherungen ausgestaltet sein.

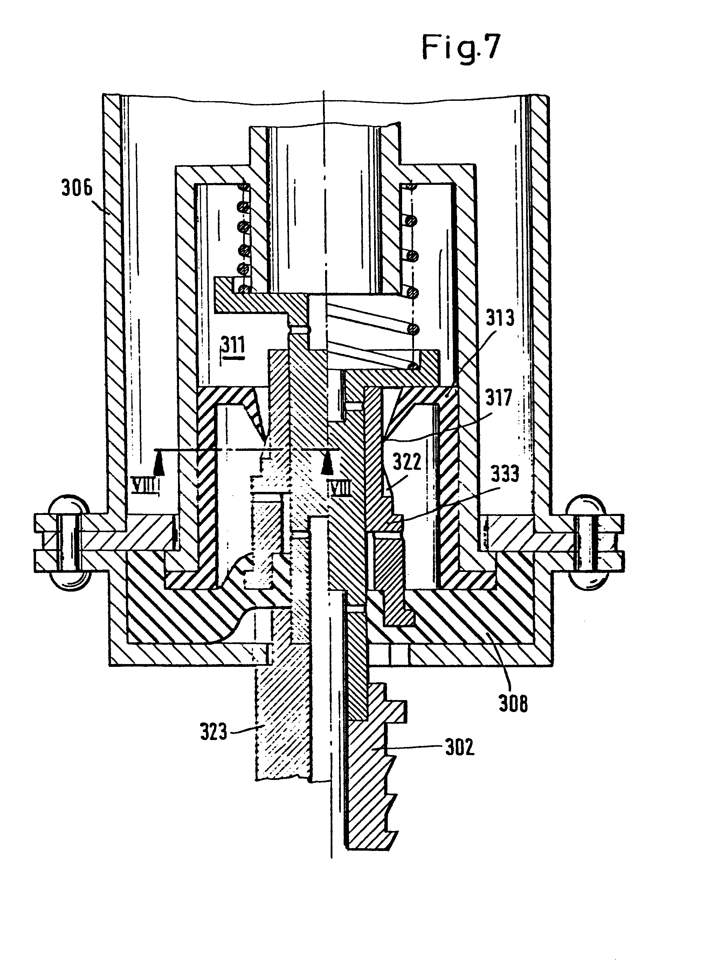

So ist beispielsweise in Fig. 1 dargestellt, dass die zur Behälterfüllung erforderliche Axiallage der Dichtlippe 17 auf der Höhe der Unebenheiten 22 dann erreicht ist, wenn der Kupplungsstecker 23 auf der Deckeldichtung 8 zum Anschlag gebracht ist. In der gezeigten Darstellung erfährt dabei die Deckeldichtung 8 keine Verformung. Im Gegensatz hierzu lässt sich bei der in Fig. 7 dargestellten Anordnung diese Axiallage nur unter Verformung der Deckeldichtung 308 herstellen. Eine derartige Verformung der Deckeldichtung kann aber auch bei einerAnordnung gemäss Fig. 1 zum Zwecke der Behälterfüllung vorgesehen werden, wenn zur Schaffung individueller Unterschiede bei Behältern des gleichen Typs die Unebenheiten 22 auf einer anderen als der in Fig. 1 gezeigten axialen Längenabmessung der Behälterwand angebracht werden und dabei stets der gleiche Kupplungsstecker 23 zur Verwendung gelangt.

Eine weitere andre Anpassung der Füllbedingungen an Behälter mit unterschiedlicher Höhenlage der Unebenheiten 22 kann aber auch darin bestehen, einen jeweils dieser Höhenlage angepassten Kupplungsstecker ohne Verformung der Deckeldichtung 8 zu verwenden.

Im Gegensatz zu den in Fig. 1 und Fig.7 gewählten Anordnungen ist bei den in den Fig.4 und 6 gezeigten Ausgestaltungen der erfindungsgemässen Vorrichtung vorgesehen, auch den prismatischen Teil des Stössels 105 bzw. 205 dem Querschnitt der Deckelöffnung anzupassen bzw. mit Stegen oder Rippen 129 bzw. 229 zu versehen. Auch sind innerhalb der Bohrung 120 bzw. 220 derartige Rippen vorgesehen, die verhindern sollen, dass durch das Aufsetzen konischer Füllstücke oder solcher aus Schlauchmaterial eine Befüllung vorgenommen werden kann. Demselben Zweck können auch Radialbohrungen 130,230 in unterschiedlicher Höhenlage im Bereich der Stege 129 dienen. Auf diese Weise wird erreicht, dass eine Füllung nur dann möglich ist, wenn, bedingt durch die Formgebung des Kupplungssteckers oder Füllstücks 123 bzw. 223 eine dichte Verbindung zwischen dem Füllstück und dem jeweiligen Stössel im vorzugsweise engsten und tiefliegensten Bereich der Bohrung 120 bzw.220 zustandekommt oder wenn beispielsweise zusätzlich mit Hilfe einer weiteren am Füllstück angebrachten Dichtung 131 bzw. 231 zusammen mit dem jeweiligen Behälterdeckel eine diesbezügliche Abdichtung erreicht wird. Bei der Ausführungsform der Vorrichtung nach Fig. 4 ist letztere Dichtung ohnehin erforderlich, da hier im Falle einer nicht sachgemäss durchgeführten Befüllung der Behälterinhalt verlorengehen soll. Die Möglichkeit hierfür wird ohne Verwendung der Dichtung 131 dadurch geschaffen, dass die Wahl der Längenabmessungen der Rippen 129 und der Deckeldichtung 108 so erfolgt, dass bei der zu Füllzwecken geeigneten Höhenlage der Dichtungslippe 117 eine Verbindung zwischen dem Zwischenraum 119 und der Behälteraussenseite hergestellt ist.

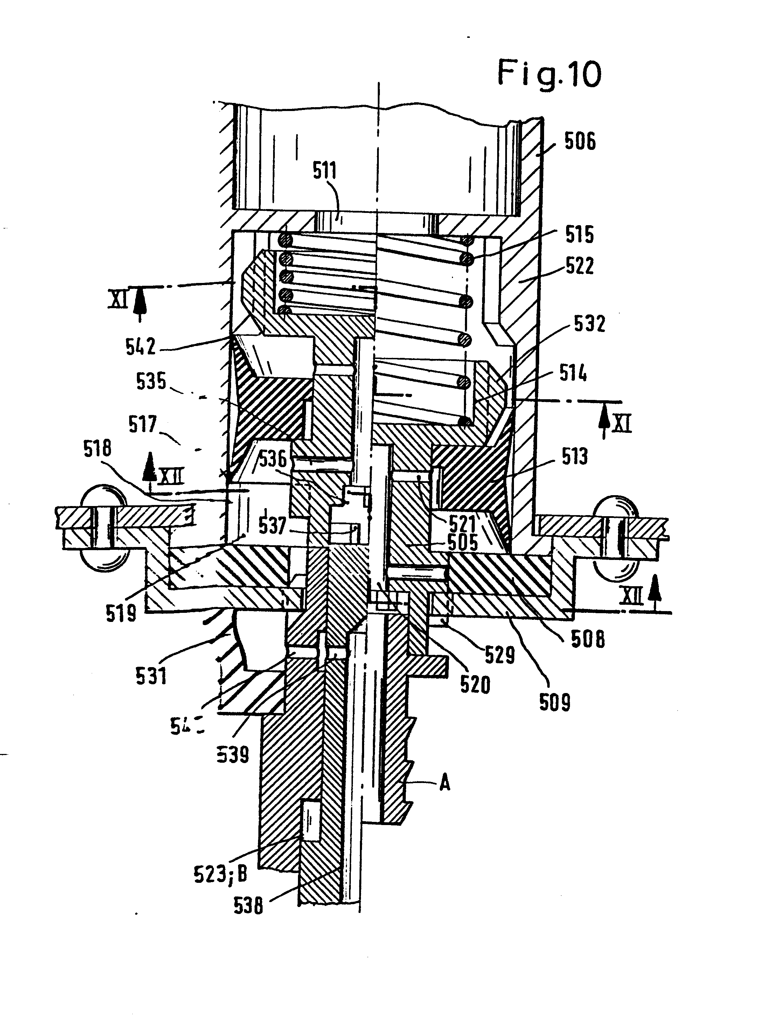

Abweichend von oder auch zusätzlich zu den bereits dargestellten Möglichkeiten, Füllsicherungseinrichtungen vorzusehen, besteht die Möglichkeit, durch die Formgebung der Deckelöffnung und der jeweils entsprechenden Formgebung des Füllstücks oder Kupplungssteckers und durch die Zuordnung beider in Umfangsrichtung erst die Voraussetzung zur Behälterfüllung zu schaffen. Darüber hinaus kann auch der Stössel selbst nach oder vor seiner Betätigung in eine bestimmte Ausrichtung bezüglich des Behälterumfangs gebracht werden. Eine derartige Möglichkeit ist bei der Ausführungsform nach den Fig.10 bis 12 gegeben. Hier weist der Bund 514 einen Durchmesser auf, der nur geringfügig kleiner ist als derjenige der Behälterinnenwand, wobei dieser Bund mit Aussparungen 532 versehen ist, die jeweils mit den Unebenheiten

- 22

0008662

522 korrespondieren, so dass eine Axialbewegung des Stössels 505 zwischen den Unebenheiten hindurch in die zum Füllen erforderliche Axiallage der Dichtlippe 517 in Höhe der Unebenheiten 522 nur dann möglich ist, wenn die richtige Zuordnung des Stössels in Umfangsrichtung zum Behälter 506 hergestellt ist, was bei der Ausführungsform nach Fig. 10 beispielsweise dadurch bewirkt werden kann, dass die Stege oder Rippen 529 des Stössels oder des Füllstückes eine Unterbrechung aufweisen, deren Länge der Stärke des Behälterdeckels 509 entspricht.

Ein wesentliches Merkmal der Erfindung ist darin zu sehen, dass die Kombination derartiger Füllsicherungen nach Art, Anzahl, Wirkungsweise, Anordnung, etc. gewissermassen einen Schlüssel darstellt, der viele Variationsmöglichkeiten zulässt und demzufolge geeignet ist, individuelle Unterschiede zwischen äusserlich mehr oder weniger gleich oder ähnlich aussehenden Behältern zu schaffen, so dass Unterscheidungen zwischen Füllgütern, Füllgutklassen, Herstellern, Abfüllern, sowie Abfülldaten und auch Verteilungswegen möglich sind bzw. ohne äussere Behälterkennzeichnung hierauf geschlossen werden kann, sofern ein entsprechender Schlüssel zur Anwendung gelangt. Demzufolge werden erfindungsgemäss Möglichkeiten zur Schaffung von Füllsicherungen geboten, die sich auf fest mit dem Behälter verbundene Einrichtungen beziehen und wobei die Form der Behälter als solche im Einzelfall keine Rolle spielt, wie dies aus den verschiedenen Ausführungsformen entnehmbar ist.

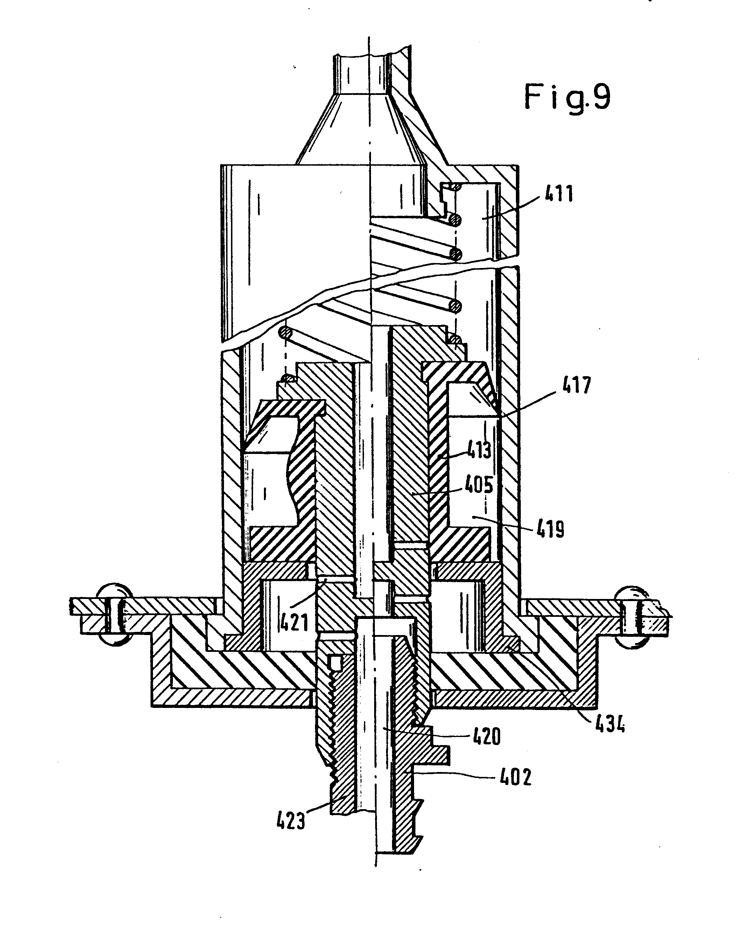

Die Fig. 7 und 8 zeigen abweichend von der Ausführungsform gemäss den Fig.1 bis 6 die Verwendung einer Manschette 313 mit innenliegender Dichtlippe 317 in Verbindung mit Unebenheiten 322, die jedoch nicht wie bei den vorerwähnten Beispielen an der Behälterinnenwand 318, sondern an einem innenliegenden Teil 333 angebracht sind, welches seinerseits wiederum an der Deckeldichtung 308 befestigt und zusammen mit dieser bei äusserer Einwirkung durch das Füllstück 323 axial verschiebbar ist. Die Manschette 313 ist ihrerseits fest mit dem Behälter 306 verbunden. Diese Anordnung stellt somit die Umkehrung des in Fig. 1 gezeigten Prinzips dar.

Im Gegensatz zu den obigen Ausführungsbeispielen kommt eine Ausführungsform gemäss Fig. 9 ohne Unebenheiten am Behälter als Füllsicherung aus. Es findet jedoch hierbei eine Manschette 413 Verwendung, die in ihrem Mittelteil unter dem Einfluss von Druckkräften, die durch an dem Stössel 405 von aussen angreifende Zugkräfte erzeugt werden, zusammengepresst werden kann, so dass im Falle der Behälterbefüllung bei Einwirkung einer solchen Zugkraft auf den Stössel im Zwischenraum 419 eine Verbindung über die Radialbohrungen 421 zwischen dem Füllstück 423 und dem Behälterinnenraum 411 zustandekommt, durch die das Füllgut dorthin gelangen kann. In umgekehrter Weise erfolgt hierbei die Füllgutentnahme ebenfalls wie bei den anderen Ausführungsformen durch Eindrücken des Stössels 405 in den Behälter, beispielsweise mit Hilfe eines Kupplungssteckers 402, welcher kein Bolzengewinde aufzuweisen braucht, das beim Füllstück 423 vorgesehen ist, um mit dessen Hilfe die für die Behälterbefüllung erforderliche Zugkraft auf den Stössel 405 übertragen zu können. Dabei ist zur Schaffung des Zwischenraums 419 ein mit dem Behälter fest verbundenes Teil 434 vorgesehen, welches gleichzeitig ein Gegenlager für die zur Behälterfüllung zur verformende Manschette 413 bildet.

Eine weitere andere Ausführungsform der erfindungsgemässen Vorrichtung ist in Fig. 10 dargestellt. Im Gegensatz zu den oben beschriebenen Ausfüh-rungsformen ist diese mit einer Doppelmanschette 513 ausgestattet, die in beiden Axialrichtungen als Dichtung wirkt, aber längsverschieblich auf dem Stössel 505 gelagert ist und sowohl in bezug auf diesen als auch in bezug auf die Behälterinnenwand 518 ein durch Anschlagflächen begrenztes Axialspiel aufweist und dabei selbst aus elas-tischem Material besteht. Die Axiallage der Doppel-manschette 513 ist durch die jeweils an ihr angreifenden sowohl äusserlich, d.h. auf den Stössel einwirkenden Kräfte, als auch durch die aufgrund von Druckunterschieden erzeugten Kräfte bestimmt. Entsprechend der Axiallage des Stössels 505 werden jeweils unterschiedliche Zustände bezüglich der Sperr- oder Durchflusseigenschaften der Vorrichtung bewirkt, die sich folgendermassen kennzeichnen lassen.

In der Schließstellung der Vorrichtung wird die Doppelmanschette 513 sowohl unter dem Einfluss der Vorspannkraft der Druckfeder 515 als auch unter dem im Behälterinnenraum 511 herrschenden Druck über ihre Dichtlippe 517 gegen die hierbei als Anschlag wirkende Deckeldichtung 508 gepresst, wobei die Abdichtung unter dem Einfluss dieser Kräfte zwischen dem Bund 514 und/oder dem zylindrischen Bereich des Stössels 505 einerseits und der Manschette 513 andererseits zustandekommt. Dabei ist der Stössel 505 infolge des mit Stegen 529 versehenen und in dieser Stellung aus dem Behälter herausragenden Teils gegen Verdrehen gesichert. Die im Behälterdeckel vorhandene Öffnung ist in diesem Fall an die Form der Stege angepasst. Die Länge der Stege 529 ist kleiner als das in dieser Drehlage vorhandene Axialspiel zwischen dem Bund 524 des Stössels 505 und den an der Behälterinnenwand 518 vorhandenen Vorsprüngen 522.

Für die Entnahme des Füllguts aus dem Behälter ist ein Kupplungsstecker 502 vorgesehen, der auf den Stössel 505 aufgesteckt wird und durch den der Stössel 505 gegen die Kraft der Druckfeder 515 in den Behälter hineingedrückt wird. Dabei ist die Eindringtiefe des Stössels 505 durch einen am Kupplungsstecker 502 angebrachten Bund, der an dem Behälterdeckel 509 anschlägt, begrenzt. Diese Eindringtiefe ist so bemessen, dass die Radialbohrung 521 des Stössels 505, die in der Schliessstellung der Vorrichtung die Verbindung zwischen dem Zwischenraum 519 und der Hauptbohrung 520 des Stössels herstellt, über den abdichtenden Bereich der Doppelmanschette 513 hinausgefahren wird. Demzufolge kommt eine Verbindung zwischen dem Behälterinnenraum 511 und der Hauptbohrung 520 zustande, vorausgesetzt, dass unter dem aus dem Behälterinnenraum 511 auf die Doppelmanschette wirkenden Oberdruck die Manschette in Anlage an der Deckeldichtung 508 bleibt.

Würde nun beispielsweise mit Hilfe des Kupplungssteckers 502 oder ähnlicher Mittel durch Einwirkung eines Füllüberdruckes versucht, den Behälter zu befüllen, so würde sich aufgrund der im Vergleich zur Radialbohrung 521 querschnittsmässig grösseren Radialbohrung 535 im Zwischenraum 519 ein höherer Druck aufbauen, als er gleichzeitig im Behälterinnenraum 511 herrscht. Demzufolge würde sich die Doppelmanschette 513 unter Wirkung des im Zwischenraum 519 herrschenden Oberdruckes in Axialrichtung gegen den Bund 514 des Stössels 505 bewegen und diesen gegen die Unebenheiten bzw. Vorsprünge 522 der Behälterinnenwand 518 pressen, so dass die Radialbohrung 521 aus dem Bereich des Behälterinnenraums 511 und in den Bereich des Zwischenraums 519 gelangt, wodurch die Vorrichtung bzw. der Behälter dicht verschlossen wird.

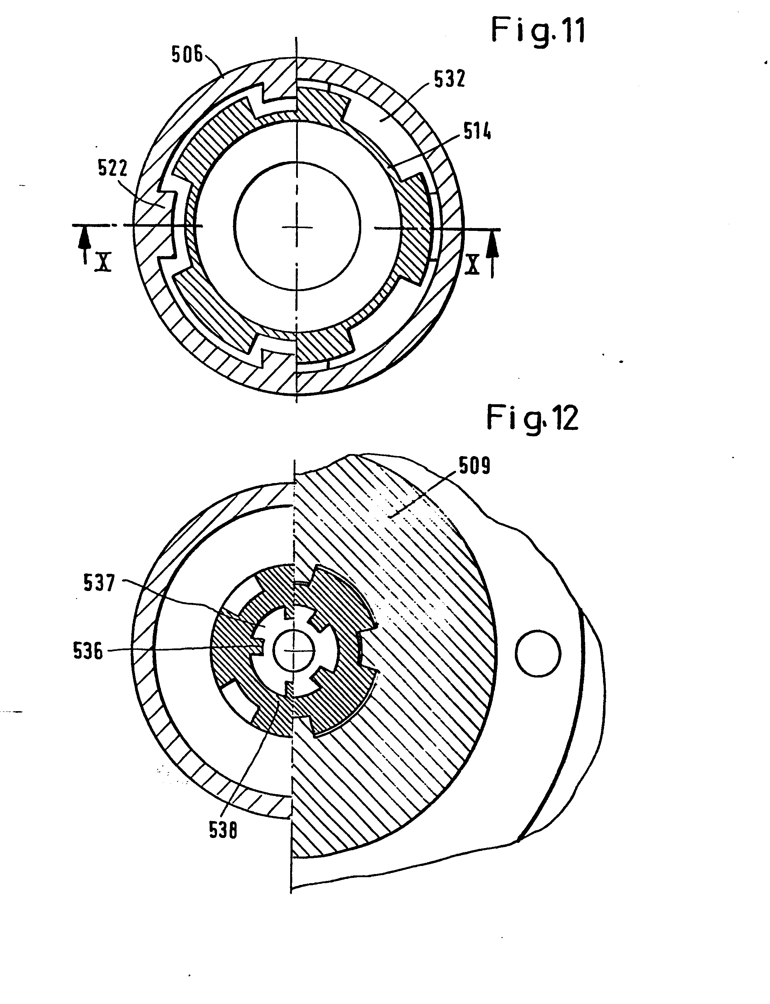

Um einen Behälter der in Fig. 10 gezeigten Art füllen zu können, bedarf es demnach weiterer Mittel und deren Betätigung zusätzlich oder abweichend von den für die Entnahme von Füllgut vorgesehenen Massnahmen bzw. Mittel. Diese weiteren Mittel sind dadurch gegeben, dass sich am Bund 514 des Stössels 505 Ausnehmungen befinden, die eine axiale Verschiebung des Stössels 505 in den Bereich der Unebenheiten bzw. Vorsprünge 522 ermöglichen, sobald durch entsprechendes Verdrehen des Stössels 505 in bezug auf den Behälter die Ausnehmungen 532 am Bund 514 den jeweiligen Vorsprüngen 522 der Behälterinnenwand gegenüberliegend angeordnet worden sind, wie aus Fig. 11 ersichtlich ist. In diesem besonderen Fall der Ausführungsform nach Fig. 10 hat diese Anordnung

der Vorsprünge 522 in bezug auf die Ausnehmungen am Bund 514 aufgrund der hier vorgesehenen, als Verdrehsicherung wirkenden Stege 529 nur in zumindest teilweise eingerücktem Zustand des Stössels 505 zu erfolgen, wobei die Verdrehsicherung der Stege 529 in Verbindung mit dem Behälterdeckel 509 ausser Funktion gesetzt ist.

Des weiteren ist zum obigen Zwecke im Hinblick auf den Stössel 505 als auch zumindest teilweise auf die Füllarmatur eine weitere Ausgestaltung denkbar, aufgrund derer zu Füllzwecken eine formschlüssige Drehverbindung zwischen dem Stössel 505 und der Füllapparatur hergestellt werden kann. Diese Drehverbindung kann beispielsweise durch ineinanderschiebbare Zähne 536,537 (Fig.12) an dem Stössel und am Innenteil 538 des Füllstücks 523 hergestellt werden, mit deren Hilfe auch nach erfolgter Befüllung des Behälters der Stössel durch abermaliges Verdrehen in die Lage versetzt wird, in die Schließstellung zu gelangen, so dass die Stege 529 wieder in eine den Ausnehmungen des Behälterdeckels 509 entsprechende Drehlage gebracht werden. Dabei kann eine bevorzugte Ausgestaltung darin bestehen, dass die zu Füllzwecken vorgesehene Drehlage des Stössels 505 die Einführung des Stössels in den Bereich der Unebenheiten 522 eine andere ist als diejenige, die als Verdrehsicherung im Bereich der Stege 529 zu Entnahmezwecken einzustellen ist.

Bei der Ausführungsform nach Fig. 10 kommt ein besonderes Füllverfahren zur Anwendung, bei dem zwei Füllstücke 523 und 538 benutzt werden, deren geometrische Zuordnung zueinander eine weitere Füll-

sicherung darstellt. Diese Füllsicherung ergibt sich daraus, dass die zur Einstellung der für die Füllung erforderlichen Drehlage des Stössels vorgesehene Eingriffsstellung der Verzahnung 536,537 wieder aufgehoben werden muss, die Zähne also wieder ausser Eingriff gebracht werden müssen, um die Radialbohrungen 539 und 540 der beiden Füllstücke auf die gleiche Höhenlage zu bringen und somit in Verbindung mit der Aussendichtung 531 auf den Behälterdeckel 509 die Voraussetzungen dafür zu schaffen, dass der zum Füllen erforderliche Durchflussweg freigegeben wird.

Das Einströmen des Füllguts in den Behälter erfolgt dabei zwischen dem äusseren Füllstück 523 und der Öffnung im Behälterdeckel 509 in den Zwischenraum 519. Das Füllgut gelangt von dort durch die Bohrungen 535,520 und 521 in den Behälterinnenraum 511, wobei, bedingt durch die Querschnittsverhältnisse der Bohrungen 535 und 521, der sich im Zwischenraum 519 einstellende Oberdruck die Doppelmanschette 513 an ihre andere Dichtlippe 542 auf den Unebenheiten 522 zur Anlage bringt.

Soll nun in erfindungsgemässer Weise eine Ausserfunktionssetzung des Behälters für den Fall unsachgemässer Manipulationen vorgesehen werden, so können die Unebenheiten 522 mit schneidenartigen Elementen versehen werden, die die Zerstörung der Dichtlippe 542 und damit die Aufhebung der Dichtwirkung und den Verlust des Behälterinhalts bewirken, wenn zu hohe Fülldrücke und/oder zu hohe von aussen auf den Stössel 505 einwirkende Kräfte auftreten, die die Dichtlippe gegen die schneidenartigen Elemente drücken, welche die Lippe zerstören.

Das allen in den Fig. 1 bis 12 dargestellten Ausführungsformen gemeinsame Merkmal ist demnach darin zu sehen, dass fest mit dem jeweiligen Behälter verbundene Mittel vorhanden sind, die sowohl als Behälterverschluss als auch für die Befüllung und Entleerung des Behälters dienen und in Verbindung mit nur zeitweilig mit dem Behälter zu Füll- und Entleerungszwecken verbindbaren anderen Elementen so gestaltet sind, dass zur Befüllung des Behälters die Mittel in anderer Weise betätigt werden müssen als zur Behälterentleerung bzw. Füllgutentnahme. Dabei sind insbesondere die zur Füllung ergreifenden Massnahmen komplizierter als die zur Behälterentleerung. Des weiteren sind die zu Füllzwecken erforderlichen Massnahmen nicht oder zumindest nicht offenscihtlich aus der äusseren Gestaltung der genannten Mittel erkennbar bzw. aus den zur Entleerung vorzunehmenden Manipulationen ableitbar, so dass auch hierin eine weitere Sicherheit gegen missbräuchliche Benutzung solcher Behälter geschaffen ist. Der so erreichte Sicherheitsgrad lässt sich durch Kombination mehrerer der oben erwähnten Gestaltungsmöglichkeiten im Hinblick auf den Behälter selbst und/oder die zusammen mit ihm zu verwendenden Füll- und Entleerungsarmaturen weiter erhöhen. Die Art der Behälter, ihre vorgesehenen Verwendungszwecke, ferner die Art der Füllgüter und die Druckbelastung der Behälter spielt im Hinblick auf die kombinierte Anwendung solcher Sicherheitsmassnahmen eine unwesentliche Rolle. Darüber hinaus sind prinzipiell an der erfindungsgemässen Vorrichtung auch weitere Ab-

änderungen möglich, die zusätzliche Sicherungsmittel, beispielsweise in Form von Steigrohren
und/oder Rückschlagventilen schaffen, so dass
derartige Anordnungen die Wirkung von beispielsweise Dosier-Abgabeeinrichtungen und/oder Pumpen
haben. Derartige Rückschlagventile können dann
ihrerseits wiederum eine Füllsicherung bilden,
die beispielsweise durch Einwirkung von magne -
tischen Kräften zeitweilig ausser Funktion gesetzt werden kann.

Es handelt sich im letzten Fall also um die Verwendung der erfindungsgemässen Vorrichtung mit
einem Rückschlagventil als Pumpe oder Dosiereinrichtung, die am Boden des Behälters so angeordnet ist, dass der Stössel durch Erzeugung
eines Oberdrucks im Behälterinnenraum, beispielsweise bei der Ausführungsform nach Fig. 4  im
Innenraum 111, das Rückschlagventil schliesst
und unter Umströmung der Dichtlippe 117 das Füllgut in den Zwischenraum 119 gelangen lässt, wobei
die Feder gespannt wird und das Füllgut bei Entlastung oder Entspannung der Feder ausgetragen
wird und gleichzeitig neues Füllgut durch das in
Fig. 4 nicht dargestellte Rückschlagventil hindurch in den Behälter eingesaugt wird. Das Rückschlagventil wird in diesem Fall beim Füllen des
Behälterinnenraums beispielsweise durch die oben
erwähnten magnetischen Kräfte offengehalten.

0008662

- 1 -

Patentansprüche:

1. Vorrichtung zum Füllen und Entleeren von Füllgutbehältern mit gasförmigen und/oder flüssigen
Stoffen, dadurch gekennzeichnet, dass der zu füllende
bzw. zu entleerende Behälter (6,106,206,506) mit
einem durch seinen Deckel (9,109,209,509) hindurch
axial verschiebbaren Stössel (5,105,205,405,505)
versehen ist, der mit einem Dichtungselement (3,
113,213,313,513) zusammenwirkt, das an der Behälterinnenwand (18,118,218) anliegt und den Behälter in
zwei Räume unterteilt, von denen der eine einen dem
Behälterdeckel abgewandten Raum oder Innenraum
(11,111,211) bildet, der das Füllgut aufnimmt, und
der andere einen dem Behälterdeckel zugewandten
oder Zwischenraum (19,119,219,419,519) bildet, der
als Transportraum für das Füllgut dient, dass das
äussere Ende des Stössels mit einer Füllarmatur
(B) und einer Entleerungsarmatur (A) verbindbar ist,
wobei letztere in bezug auf den Behälterdeckel in
der Schließstellung eine fixe Lage einnimmt, in
der der Durchflussweg für das Füllgut gesperrt
ist, jedoch zur Entleerung in eine Lage verschiebbar ist, in der der Durchflussweg geöffnet ist,
wobei die Füllarmatur (B) durch axiales Verschieben
und/oder Verdrehen des Stössels in bezug auf den
Behälter eine Füllstellung einnimmt, in der ein
Durchflussweg in den Behälterinnenraum (11,111,
211,411,511) geöffnet ist, und dass das Dichtungselement im Behälterinnenraum mit einer Dichtungsfläche zusammenwirkt, durch die bei einer ein vorgesehenes Mass überschreitenden axialen Verschiebung oder Verdrehung des Stössels die Abdichtung
des Behälterinnenraums zur Durchführung der Befüllung aufhebbar ist.

0008662

- 2 -

2.   Vorrichtung zum Füllen und Entleeren von Füllgutbehältern mit gasförmigen und/oder flüssigen Stoffen, dadurch gekennzeichnet, dass der zu füllende bzw. zu entleerende Behälter (6,106,206,506) mit einem durch seinen Deckel (9,109,209,509) hindurch axial verschiebbaren Stössel (5,105,205,405, 505) versehen ist, der mit einem Dichtungselement (13,113,313,413,513) zusammenwirkt, das an der Behälterinnenwand (18,118,218) anliegt und den Behälter in zwei Räume unterteilt, von denen der eine einen dem Behälterdeckel abgewandten Raum oder Innenraum (11,111,211) bildet, der das Füllgut aufnimmt, und der andere einen dem Behälterdeckel zugewandten oder Zwischenraum (19,119,219,419,519) bildet, der als Transportraum für das Füllgut dient, dass das äussere Ende des Stössels mit einer Füllarmatur (B) und einer Entleerungsarmatur (A) verbindbar ist, wobei letztere in bezug auf den Behälterdeckel in der Schließstellung eine fixe Lage einnimmt, in der der Durchflussweg für das Füllgut gesperrt ist, jedoch zur Entleerung in eine Lage verschiebbar ist, in der der Durchflussweg geöffnet ist, und dass das Dichtungselement (413) zum Füllen des Behälters so verformbar ist, dass sich ein Durchflussweg für das Füllgut öffnet, der in der Schließstellung der Entleerungsarmatur (A) geschlossen ist und durch axiales Verschieben des Dichtungselements (413) mit Hilfe des Stössels (405) zur Füllgutentnahme geöffnet wird.

3.   Vorrichtung nach Patentanspruch 1, dadurch gekennzeichnet, dass die Dichtungsfläche im Behälterinnenraum (11,111,211,311), an der das Dichtungselement (13,113,213,313) zur Anlage kommt, Unebenheiten (22,122,222,322) aufweist, die nach ihrem Oberfahren durch das Dichtungselement dieses arretieren und an seiner Rückbewegung in die Ausgangsstellung hindern.

4. Vorrichtung nach Patentanspruch 3 , dadurch gekennzeichnet, dass nach dem Oberfahren der Unebenheiten (122,222) der Dichtungsfläche das Dichtungselement (113,213) in eine Abdichtungslage schnappt und das Füllgut am Entweichen aus dem Behälterinnenraum (111,211) hindert.

5. Vorrichtung nach Patentanspruch 3, dadurch gekennzeichnet, dass die Unebenheiten (322) der Dichtungsfläche nach dem Oberfahren durch das Dichtungselement (313) die Abdichtung des Behälterinnenraums (311) aufheben.

6. Vorrichtung nach Patentanspruch 1, dadurch gekennzeichnet, dass bei Verwendung einer dem Deckel (509) abgewandten Dichtungslippe (542) am Dichtungselement (513) der Behälter (506) mit schneidenförmig ausgebildeten Unebenheiten (522) versehen ist, die beim Oberfahren durch die abgewandte Dichtungslippe letztere und damit die Abdichtung des Behälterinnenraums (511) zerstören.

7. Vorrichtung nach Patentanspruch 1, dadurch gekennzeichnet, dass die in dem Stössel (5) befindlichen Durchflusswege für das Füllgut in der Entleerungsstellung eine andere Winkellage in bezug auf den Behälter (11) haben als in der Füllstellung.

8. Vorrichtung nach Patentanspruch 1, dadurch gekennzeichnet, dass sich in dem Stössel (105) ein aus einem elastischen Material bestehender Stöpsel (12) befindet, der unter der Wirkung des im Behälterinnenraum (111) herrschenden Oberdrucks mit dem Stössel (105) dicht verbunden ist und das Füllgut am Entweichen aus dem Behälterinnenraum hindert.

9. Vorrichtung nach Patentanspruch 8, dadurch gekennzeichnet, dass der Stöpsel (128) radial vorgespannt ist, und dass sich sein hinteres Ende beim Herausschieben des Stöpsels aus seiner Dichtungslage in bezug auf die Deckeldichtung (108) seitlich verschiebt und an die Rückkehr in die Ausgangslage gehindert ist.

10. Vorrichtung nach Patentanspruch 3 oder 4, dadurch gekennzeichnet, dass die Unebenheiten (222) rippenförmig ausgebildet und in ihrer Länge in bezug auf die Länge der Deckeldichtung (208) so gewählt sind, dass im Falle des Oberfahrens des Dichtungselementes (213) zwischen der Deckeldichtung (208) und dem Stössel (205) eine Oberdeckung stattfindet, die kein im Zwischenraum (219) befindliches Füllgut aus dem Behälter gelangen lässt.

11. Vorrichtung nach Patentanspruch 1, dadurch gekennzeichnet, dass der Stössel (205) mit einem aus elastisch verform rem Material bestehenden Stöpsel (228) in formschlüssiger Verbindung steht, der eine durch den Stössel führende Radialbohrung (221) überdeckt und im Entleerungsfalle durch den in der Radialbohrung (221) herrschenden Druck so verformbar ist, dass das Füllgut an ihm vorbeiströmt.

12. Verwendung einer Vorrichtung gemäss einem der Patentansprüche 1 bis 11 mit einem Rückschlagventil als Pumpe oder Dosiereinrichtung, die am Boden des Behälters angeordnet ist, dadurch gekennzeichnet, dass das Rückschlagventil mit Hilfe des Stössels (105,405) durch Erzeugung eines Oberdrucks im Behälterinnenraum (111,411) schliessbar ist und unter Umströmung des Dichtungselements (113, 413) das Füllgut in den Zwischenraum (119,419) gelangen lässt, wobei die Feder (115) spannbar ist und bei ihrer Entlastung das Füllgut aus dem Behälter unter gleichzeitiger Einsaugung von neuem Füllgut durch das Rückschlagventil in den Behälter aus dem Behälter austragbar ist, und wobei das Rückschlagventil beim Füllen des Behälterinnenraums durch magnetische Kräfte offenhaltbar ist.

0008662

Fig.1

Fig. 2

Fig. 3

Fig. 4

0008662

3/9

122
IV
117
128

Fig.5

Fig.8

333
317
313
VII
VII

Fig.6

# Fig.7

306

313

317

311

322

333

VIII

VIII

323

308

302

Fig.9

Fig.10

Fig.11

506
532
514
522
X
X

Fig.12

509
537
536
538

0008662

**EUROPÄISCHER RECHERCHENBERICHT**

Europäisches
Patentamt

Nummer der Anmeldung

EP 79 10 2653

## EINSCHLÄGIGE DOKUMENTE

| egorie | Kennzeichnung des Dokuments mit Angabe, soweit erforderlich, der maßgeblichen Teile | betrifft Anspruch |
|---|---|---|
| | US - A - 3 982 674 (W.D. MILDERN) <br> * Figuren 5-10 * <br><br> -- | 1,2 |
| | FR - A - 2 083 835 (THE RISDON MANUFACTURING CO.) <br> * Seiten 8,9; Figuren 1,2 * <br><br> -- | 1,2 |
| | US - A - 3 180 374 (J.E. MULLER) <br> * Figuren 1-5 * <br><br> -- | 1,2 |
| | FR - A - 2 367 238 (BRISTOL SCREW PRODUCTS CORP.) <br> * Figuren 1-6; Seite 6, Anspruch 1 * <br><br> -- | 1 |
| | US - A - 3 589 397 (W. WAGNER) <br> * Figuren 4-8; Zusammenfassung * <br><br> ---- | 1 |

**KLASSIFIKATION DER ANMELDUNG (Int.Cl. 3)**

B 65 D 83/14
F 16 K 35/00

**RECHERCHIERTE SACHGEBIETE (Int. Cl. 3)**

B 65 D 83/14
F 16 K 35/00
B 67 D   1/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-10-1979 | THIBO |

EPA form 1503.1   06.78